## Europäisches Patentamt

## European Patent Office

## Office européen des brevets

(11) Veröffentlichungsnummer: **0 408 794 A1**

# EUROPÄISCHE PATENTANMELDUNG

(21) Anmeldenummer: 89113336.5

(51) Int. Cl.5: **G06F 13/24**

(22) Anmeldetag: 20.07.89

(43) Veröffentlichungstag der Anmeldung:
23.01.91 Patentblatt 91/04

(84) Benannte Vertragsstaaten:
AT BE CH DE ES FR GB GR IT LI LU SE

(71) Anmelder: **Siemens Aktiengesellschaft**
**Wittelsbacherplatz 2**
**D-8000 München 2(DE)**

(72) Erfinder: **Schalk, Karl, Dipl.-Ing. (FH)**
**Paumannstrasse 124**
**D-8500 Nürnberg(DE)**
Erfinder: **Hennig, Bernd, Dipl.-Ing. (FH)**
**Händelstrasse 22**
**D-8510 Fürth(DE)**
Erfinder: **Müller, Manfred, Dipl.-Ing. (FH)**
**Bauvereinstrasse 14**
**D-8500 Nürnberg(DE)**

(54) **Peripheriebaugruppe, insbesondere in einem Automatisierungsgerät mit dezentraler Programmsteuerung.**

(57) Die Peripheriebaugruppe (SVB) eines programmgesteuerten Gerätes verfügt über eine Vielzahl (PBM) von Betriebsmitteln (B1...Bn). Diese dienen als Prozeßschnittstelle (PS) zum Ein- bzw. Auslesen von Prozeßsignalen (P1...Pn). Einige Größen insbesondere am Ein- bzw. Ausgang eines jeden Betriebsmittels dienen auch als Interruptquellen (IBII...IBIk,...,IBnl...IBnk). Im Baugruppenarbeitsspeicher (RAM) der Baugruppenverarbeitungseinheit (VE) ist für jedes Betriebsmittel (B1...Bn) ein Speicherbereich (RAMB1...RAMBn) vorgesehen. Dieser enthält eine der Anzahl an Interruptquellen des jeweiligen Betriebsmittels entsprechende Anzahl an Befehlslisten (BBII..BBIIk,...,BBnI...BBnk). Die Aktivität einer Interruptquelle wird der Zentralverarbeitungseinheit des programmgesteuerten Gerätes signalisiert. Parallel zur Auslösung des zentralen Interruptes und zur Identifikation der aktiven Interruptquelle wird die dazugehörige Befehlsliste im Baugruppenarbeitsspeicher (RAM) dezentral nahezu in Echtzeit bearbeitet. Hierdurch ergibt sich eine wesentliche Erhöhung der Bearbeitungsgeschwindigkeit, da bis zur Auslösung des Interruptes in der Zentralverarbeitungseinheit und der Identifikation der aktiven Interruptquelle das Ergebnis der Befehlslistenbearbeitung bereits vorliegt.

Fig. 2

EP 0 408 794 A1

## PERIPHERIEBAUGRUPPE, INSBESONDERE IN EINEM AUTOMATISIERUNGSGERÄT MIT DEZENTRALER PROGRAMMSTEUERUNG

Die Erfindung betrifft eine Peripheriebaugruppe mit dezentraler Programmsteuerung, welche mindestens über eine Systembusleitung mindestens mit einer Zentralverarbeitungseinheit eines programmgesteuerten Gerätes verbunden ist. Die Erfindung betrifft ferner vorteilhafte Verwendungen der Peripheriebaugruppe.

Bei programmgesteuerten Geräten, insbesondere sogenannten Automatisierungsgeräten zur Steuerung und Regelung von Maschinen und technischen Prozessen, werden in der Regel eine Vielzahl von Peripheriebaugruppen benötigt. Diese ermöglichen den Austausch von Meß-, Steuer- und Regelsignalen ("MSR-Signale"), welche in der Regel in einer sehr großen Anzahl vorliegen, zwischen dem Automatisierungsgerät und dem zu führenden Objekt.

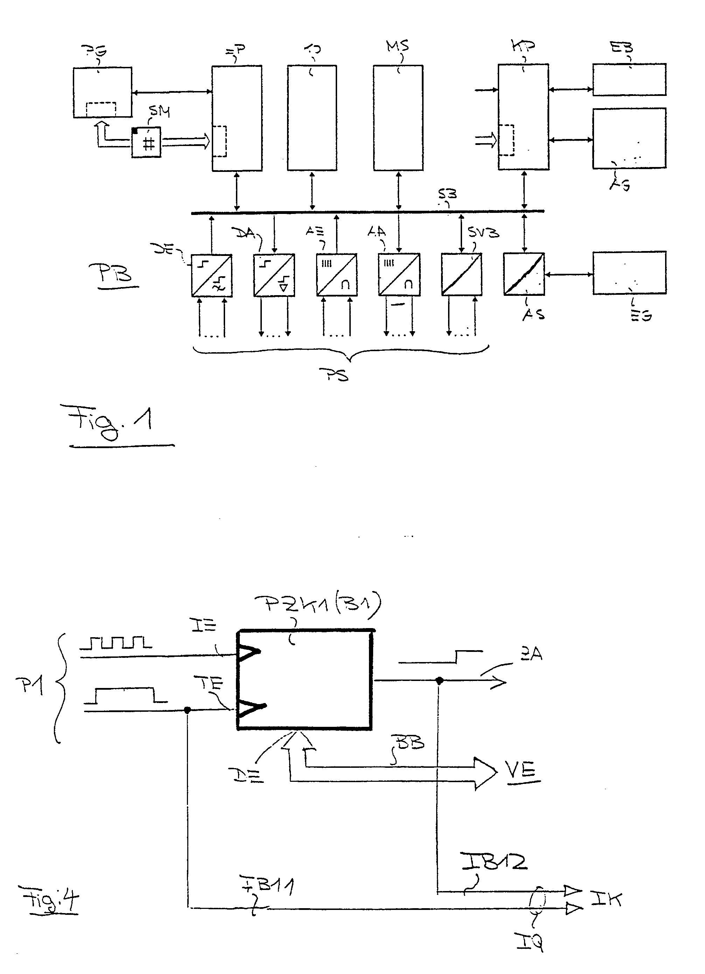

In FIG 1 ist das Blockschaltbild eines derartigen programmgesteuerten Gerätes beispielhaft dargestellt. Das Kernstück ist eine übergeordnete Zentralverarbeitungseinheit ZP, welche mindestens über eine Systembusleitung SB mit weiteren Elementen kommuniziert. Als Beispiele derartiger Elemente sind in FIG 1 ein Koordinatorbaustein KO, ein Massenspeicher MS, ein Kommunikationsprozessor KP zur Verbindung des programmgesteuerten Gerätes beispielsweise mit einem Externbus EB bzw. externen Arbeitsgeräten AG, z.B. Druckern, und eine Anschaltbaugruppe AS zur Anbindung von Erweiterungsgeräten EG an den Systembus SB dargestellt. Zur Bedienung der Zentralverarbeitungseinheit ZP kann desweiteren ein Programmiergerät PG vorgesehen sein, womit bevorzugt gemeinsam mit einem austauschbaren Speichermodul SM z.B. individuelle Anwenderprogramme bevorzugt in die Zentralverarbeitungseinheit ZP des programmgesteuerten Gerätes geladen werden können.

Ein derartiges Gerät verfügt desweiteren in der Regel über eine Vielzahl von Peripheriebaugruppen PB, welche eine Prozeßschnittstelle PS bildend die Kommunikation des programmgesteuerten Gerätes mit dem zu beeinflussenden Objekt ermöglichen, z.B. einer Maschine bzw. einem technischen Prozeß. In FIG 1 sind als derartige Peripheriebaugruppen PB beispielhaft je eine Digital-Ein- und Ausgabebaugruppe DE bzw. DA, eine Analogwert-Ein- und Ausgabebaugruppe AE bzw. AA und eine sogenannte signalvorverarbeitende Peripheriebaugruppe SVB dargestellt.

Derartige signalvorverarbeitende Baugruppen enthalten in der Regel eine große Anzahl von Betriebsmitteln mit bevorzugt gleicher Grundfunktion zur Vorgabe und/oder Verarbeitung von externen Signalen. Eine Signalvorverarbeitung kann dabei zum einen dadurch möglich sein, daß bei jedem Betriebsmittel im Rahmen dieser Grundfunktion mögliche, spezielle Betriebsarten programmiert vorgebbar sind. Für eine derartige Betriebsartenvorgabe bzw. "Moduseinstellung" können auf Betriebsmittelebene Steuerworte dienen, welche der jeweiligen Peripheriebaugruppe von der übergeordneten Zentralverarbeitungseinheit ZP direkt vorgegeben werden. Hierdurch ist es möglich, ein jedes Betriebsmittel auf der Peripheriebaugruppe in seiner Betriebsart anwendungsabhängig an das damit verbundene Betriebsmittel auf der Prozeßseite so anzupassen, daß die Ergebnisgrößen am Ausgang des jeweiligen Betriebsmittels der Baugruppe möglichst ohne bzw. mit nur wenigen Zwischenverarbeitungsschritten in der übergeordneten Zentralverarbeitungseinheit weiter verarbeitet werden können. Mit derartigen Steuerworten auf Betriebsmittelebene können die einzelnen Betriebsmittel einer Peripheriebaugruppe nur separat voneinander beeinflußt werden. Alle Betriebsmittel stellen parallel und unabhängig voneinander ihre Ergebniswerte der Zentralverarbeitungseinheit zur Verfügung. Eine Verknüpfung von mehreren Ergebniswerten einzelner Baugruppenbetriebsmittel ist in diesem Fall nur übergeordnet in der Zentralverarbeitungseinheit möglich.

Bei einer weiteren Form von Signalvorverarbeitung auf der Peripheriebaugruppe werden dieser von der Zentralverarbeitungseinheit bevorzugt in Koordination mit einem zentralen Anwenderprogramm auch einzelne Befehlsworte auf Baugruppenebene bevorzugt interruptgesteuert direkt vorgegeben. Diese Befehlsworte werden auf der Baugruppe in der Regel mittels einer eigenen, dezentralen Verarbeitungseinheit bearbeitet. Sie ermöglichen beispielsweise den gleichzeitigen Zugriff auf mehrere Betriebsmittel bzw. die Verknüpfung der Ergebniswerte mehrerer Betriebsmittel zu einem Gesamtergebniswert. Eine derartige Signalvorverarbeitung auf Peripheriebaugruppenebene entlastet die Zentralverarbeitungseinheit und trägt desweiteren zur insgesamt schnelleren Befehlsverarbeitung auch deswegen bei, weil die Befehlsverarbeitung auf der Peripheriebaugruppe häufig in Echtzeit viel schneller erfolgen kann als in der Zentralverarbeitungseinheit.

Häufig verfügen jedoch moderne Peripheriebaugruppen zum einen über eine große Anzahl von parallelen Betriebsmitteln mit bevorzugt gleicher Grundfunktion. Desweiteren ist man bestrebt, durch Vergrößerung des jeweiligen Vorrates an möglichen Steuerworten auf Betriebsmittelebene und an Befehlsworten auf Baugruppenebene zunehmend mehr Funktionen von der Zentralverarbeitungseinheit und dem dortigen Anwenderprogramm auf die in der Regel schneller arbeitenden Peripheriebaugruppen zu verlagern. Dies wird aber durch die interruptbedingten Datentransferzeiten beim Austausch der Steuer-, Befehlsworte und Ergebniswerte zwischen der Zentralverarbeitungseinheit und den Peripheriebaugruppen bzw. deren Betriebsmitteln begrenzt. Dies hat seine Ursache darin, daß ein jedes Auslesen eines Steuer-bzw. Befehlswortes aus der Zentralverarbeitungseinheit bzw. das Einlesen eines Ergebnis- bzw. Zwischenergebniswertes von einer der signalvorverarbeitenden Peripheriebaugruppen eine interruptbedingte Unterbrechung des übergeordneten Anwenderprogrammes in der Zentralverarbeitungseinheit zur Folge hat. Hierdurch entstehen aber Verlustzeiten, die zum geordneten Unterbrechen bzw. Weiterbearbeiten des zen tralen Anwenderprogrammes benötigt werden. Eine Signalvorverarbeitung auf Peripheriebaugruppenebene bewirkt somit nur dann eine Erhöhung der Bearbeitungsgeschwindigkeit des gesamten Automatisierungssystemes, solange durch den Austausch von einzelnen Steuer-, Befehlsworten und Ergebniswerten die Interruptbelastung des Gesamtsystems nicht zu groß wird. Aufgrund des ständig zunehmenden Vorrates an Steuer- und Befehlsworten wird allerdings immer häufiger und vom Anwender unbemerkt der Zustand erreicht, bei dem der Zeitgewinn durch die schnelle Steuer- und Befehlswortverarbeitung auf Baugruppenebene durch den Zeitverlust bei der dadurch bedingten Interruptkommunikation überkompensiert wird, so daß im Ergebnis das Gesamtsystem mehr blockiert als entlastet wird.

Der Erfindung liegt die Aufgabe zugrunde, eine Vorrichtung anzugeben, bei der die obengenannten Nachteile signalvorverarbeitender Peripheriebaugruppen vermieden werden, so daß selbst bei einem großen Vorrat an Steuer- bzw. Befehlsworten auf Betriebsmittel bzw. Baugruppenebene eine mit der Verlagerung von Teilen des übergeordneten Anwenderprogrammes auf die jeweilige Peripheriebaugruppe parallele Zunahme der Gesamtsystembearbeitungsgeschwindigkeit erreicht werden kann.

Die Aufgabe wird gelöst mit Hilfe der in Anspruch 1 angegebenen Peripheriebaugruppe mit dezentraler Programmsteuerung. Vorteilhafte Ausführungsformen und Verwendungen der Erfindung sind in den Unteransprüchen angegeben.

Die Erfindung wird desweiteren anhand der nachfolgend kurz angeführten Figuren näher erläutert. Dabei zeigt:

FIG 1 das bereits beschriebene Blockschaltbild von einem insbesondere als Automatisierungssystem dienenden bekannten programmgesteuerten Gerätes mit einer bekannten signalvorverarbeitenden Peripheriebaugruppe als Prozeßschnittstelle,

FIG 2 ein Strukturbild einer Peripheriebaugruppe mit dezentraler Programmsteuerung gemäß der Erfindung,

FIG 3 skizzenhaft einen Zeitablaufplan für die Bearbeitung eines von einem Baugruppenbetriebsmittel hervorgerufenen Interruptes gemäß der vorliegenden Erfindung im Vergleich zu einer bekannten Bearbeitungsweise, und

FIG 4 einen Kanal einer Zählerbaugruppe als Beispiel für ein Betriebsmittel einer Peripheriebaugruppe mit dezentraler Programmsteuerung gemäß der Erfindung.

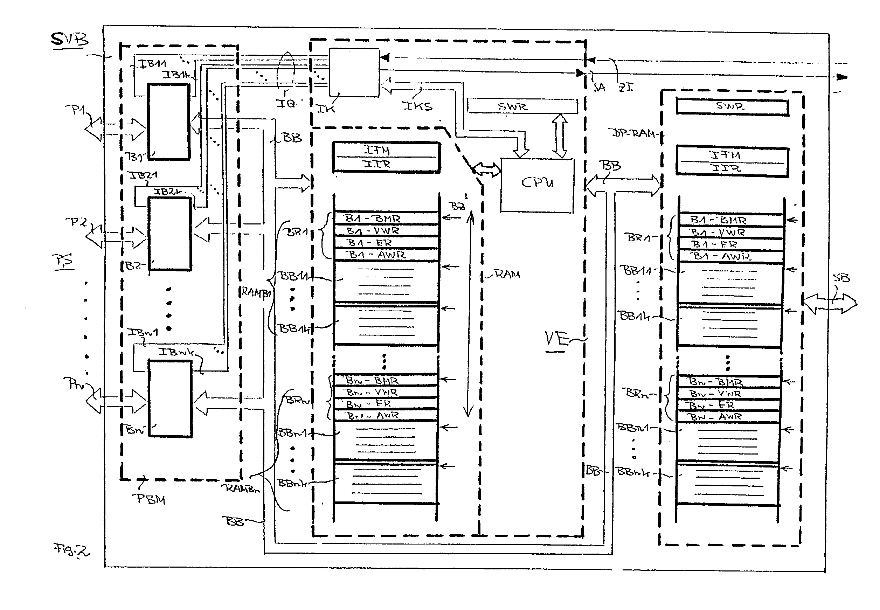

In FIG 2 ist als Strukturbild eine Peripheriebaugruppe SVB mit dezentraler Programmsteuerung übersichtsmäßig dargestellt. Diese enthält eine Vielzahl PBM von Baugruppenbetriebsmitteln B1...Bn mit bevorzugt gleicher Grundfunktion zur Vorgabe und/oder Verarbeitung von externen Prozeßsignalen P1...Pn. Die somit als Prozeßschnittstelle PS dienenden Betriebsmittel PBM kommunizieren über eine interne Baugruppenbusleitung BB gemäß einer ersten Ausführungsform der Erfindung mit einer ebenfalls baugruppeninternen Verarbeitungseinheit VE. Diese enthält zumindest einen Baugruppenprozessor CPU, welcher mit einem Baugruppenarbeitsspeicher RAM und einem sogenannten Interrupt-Kontroller IK zusammenarbeitet. Desweiteren kann noch ein Steuerwortregister SWR vorgesehen sein, welches bevorzugt ebenfalls im Baugruppenarbeitsspeicher RAM untergebracht ist.

Bei den Betriebsmitteln B1...Bn dienen einige von außen zugängliche Größen insbesondere an dessen Ein- und/Ausgängen auch als Interruptquellen. Bei Aktivierung eines dieser Signale bzw. beim Auftreten eines bestimmten Signalzustandes, z.B. einem Nulldurchgang, wird ein dazugehöriger Interrupt in der übergeordneten Zentralverarbeitungseinheit ZP ausgelöst, d.h. eine vorübergehende Unterbrechung des dort aktuell bearbeiteten Anwenderprogrammes. In FIG 2 sind als Interruptquellen IQ bei den Betriebsmitteln B1,B2...Bn beispielhaft die Größen IBl1...IBlk, IB2l...IB2k,...,IBnl...IBnk dargestellt. Diese Interruptquelleitungen IQ werden beispielhaft in einem Interrupt-Kontroler IK zur wei teren Verarbeitung zusammengefaßt, welcher bevorzugt in der baugruppeninternen Verarbeitungseinheit VE untergebracht ist. Die Aktivierung einer dieser Interruptquellen IQ wird der Zentralverarbeitungseinheit ZP bevorzugt über den Interrupt-Kontroller IK insbesondere über eine Sammelalarmleitung SA signalisiert.

Gemäß der Erfindung ist für jedes der Betriebsmittel B1....Bn ein bestimmter Bereich RAMB1...RAMBn des Baugruppenarbeitsspeichers RAM reserviert. Jeder dieser Bereiche enthält eine der Anzahl der Interruptquellen des jeweiligen Betriebsmittels entsprechende Anzahl an Befehlslisten. So enthält der Speicherbereich RAMB1 für das Betriebsmittel B1 die zu den Interruptquellen IBll...IBlk gehörigen Befehlslisten BBll...Blk. Entsprechend enthält der Speicherbereich RAMBn für das Betriebsmittel Bn die zu den Interruptquellen IBnl...IBnk gehörigen Befehlslisten BBnl...BBnk. Erfindungsgemäß dienen die Befehlslisten zum Hinterlegen von mindestens einem, in der Regel aber einer Vielzahl von Befehlsworten auf Baugruppenebene bzw. Steuerworten auf Betriebsmittelebene für die dezentrale Programmsteuerung. Der Anwender kann somit parallel zum Anwenderprogramm in der Zentralverarbeitungseinheit ZP jeder der Interruptquellen IBll...IBnk der jeweiligen Peripheriebaugruppe SVB eine individuelle Folge von Befehls- und Steuerworten zuordnen, welche bei Aktivierung der dazugehörigen Interruptquelle vom Baugruppenprozessor CPU der Baugruppenverarbeitungseinheit VE bearbeitet werden. Da insbesondere die Befehlsworte die Ebene der gesamten Baugruppe, d.h. alle Betriebsmittel B1...Bn betreffen, können mittels jeder Befehlsliste anwendungsabhängig ein oder mehrere beliebige, insbesondere lesende, schreibende oder steuernde Eingriffe auf ein bzw. mehrere Betriebsmittel der Peripheriebaugruppe programmgesteuert ausgeführt werden.

Bei Aktivierung einer der Interruptquellen IQ eines der Betriebsmittel Bn der Peripheriebaugruppe SVB wird der Zentralverarbeitungseinheit ZP über die Verarbeitungseinheit VE die Aktivität einer Interruptquelle signalisiert und Mittel zur Interruptidentifikation bereitgestellt. Diese können beispielsweise ein Interrupt-Informationsregister IIR enthalten, welches wiederum bevorzugt im Arbeitsspeicher RAM der Peripheriebaugruppe angeordnet ist und bevorzugt über den Interrupt-Kontroller IK, die zum Baugruppenprozessor CPU gehende Interrupt-Kontrollersteuerleitung IKS und schließlich vom Baugruppenprozessor CPU selbst mit einer Interruptkennung geladen werden. Die darin gespeicherte Information dient sowohl für den Baugruppenprozessor CPU als auch für die Zentralverarbeitungseinheit ZP im programmgesteuerten Gerät zur Identifikation der aktuell aktiven Interruptquelle. So bringt als Folge davon zum einen der Baugruppenprozessor CPU die zur jeweils aktiven Interruptquelle gehörige Befehlsliste BBnk im Speicherbereich RAMBn des jeweiligen Betriebsmittels Bn zur Ausführung.

Parallel zu dieser dezentralen Befehlslistenbearbeitung wird aufgrund der Signalisierung der Aktivität einer Betriebsmittel-Interruptquelle bevorzugt über die Sammelalarmleitung SA ein Interrupt der übergeordneten Zentralverarbeitungseinheit ZP ausgelöst. Diese bearbeitet das übergeordnete Anwenderprogramm in der Regel zunächst bis zu einem gewissen Programmpunkt weiter und kann dieses erst dann geordnet unterbrechen. Daran schließt sich insbesondere durch Lesen des Inhaltes des Interruptinformations-Registers IIR der den Interrupt signalisierenden Peripheriebaugruppe SVB ebenfalls die Interruptidentifikation in der Zentralverarbeitungseinheit ZP an. Diese hat das Ziel, die zum jeweiligen Interrupt gehörige Befehlsliste bzw. Unterprogramm im übergeordneten Anwenderprogramm zu identifizieren, um z.B. das aufgrund der parallelen Bearbeitung der Befehlsliste erwartete Bearbeitungsergebnis abzuholen.

Der besondere Vorteil der Erfindung besteht nun darin, daß in der Zeit, welche die Zentralverarbeitungseinheit ZP benötigt, um nach Auftreten eines die Aktivität einer Interruptquelle eines Betriebsmittels auf einer Peripheriebaugruppe signalisie renden Sammelalarmes das Anwenderprogramm geordnet zu unterbrechen und den gemeldeten Interrupt zu identifizieren, die zum jeweiligen Interrupt gehörige Befehlsliste im Arbeitsspeicher RAM der jeweiligen Peripheriebaugruppe in der Regel bereits bearbeitet und das Bearbeitungsergebnis für die Zentralverarbeitungseinheit bereitgestellt ist. Dies liegt zum einen daran, daß die Befehlslisten im Arbeitspeicher der jeweiligen Peripheriebaugruppe in der Regel in Echtzeit viel schneller bearbeitet werden können, als wenn diese im Anwenderprogramm der Zentralverarbeitungseinheit ZP hinterlegt wären.

Wie bereits oben ausgeführt, ist in dem bekannten Fall, bei dem die zu eine Interruptquelle eines Betriebsmittels auf einer Peripheriebaugruppe gehörigen Befehlsworte im übergeordneten Anwenderprogramm der Zentralverarbeitungseinheit hinterlegt sind, eine Erhöhung der Bearbeitungsgeschwindigkeit des Gesamtsystems nur bis zu einem gewissen Maß zu erreichen. Da in diesem Fall bei Aktivität einer Interruptquelle das oder die dazugehörigen Befehlsworte erst einzeln per Interrupt an die Peripheriebaugruppe transferiert, dort bearbeitet und das Bearbeitungsergebnis jeweils wiederum per Interrupt an die Zentralverarbeitungseinheit zurückgegeben werden muß, kann eine Erhöhung der Rechenleistung nur insoweit erreicht werden, als die Interruptverlustzeiten beim Befehlswort- und Ergebniswertaustausch zwischen Zentralverarbeitungseinheit und Peripheriebaugruppe nicht größer sind als der durch die höhere Bearbeitungsgeschwindigkeit der Befehlsworte auf Baugruppenebene erzielte Zeitgewinn. So tritt eine Erhöhung der Rechenleistung nur dann auf, wenn direkte Übergaben von einzelnen Befehlsworten an Peripheriebaugruppen nur mit einer kleineren oder mittleren Häufigkeit auftreten. Mit deren Zunahme schlägt dieser Zeitgewinn, in der Regel vom Anwender unbemerkt, in einen Zeitverlust um, da nun die Verlustzeiten bei der Organisation der vielen Interrupts der Zentralverarbeitungseinheit überwiegen. Dies läßt sich nur vermeiden, indem die Möglichkeiten des Anwenders insbesondere durch Beschränkung des Vorrates an Befehlsworten eingeengt werden, und er somit ge zwungen ist, den Großteil der Signalverarbeitungen in der Zentralverarbeitungseinheit selbst vorzunehmen.

Bei der vorliegenden Erfindung dagegen hat eine jede Zunahme in der Verlagerung von Befehls- und Steuerworten vom Anwenderprogramm in der Zentralverarbeitungseinheit auf Befehlslisten der jeweiligen Peripheriebaugruppe eine Erhöhung der Verarbeitungszeit des gesamten Automatisierungssystems zur Folge. Die Ursache hierfür liegt darin, daß die Anzahl der die Zentralverarbeitungseinheit belastenden Interrupte nicht mit der Anzahl der in der jeweiligen Befehlsliste BBnk enthaltenen Befehlsworte zunimmt. Die Anzahl ist vielmehr konstant und hat in der Regel den Wert 1, da zum Abholen des Ergebnisses eine Befehlsliste aus dem Arbeitsspeicher RAM einer Peripheriebaugruppe lediglich ein einziger Interrupt des übergeordneten Anwenderprogrammes erforderlich ist.

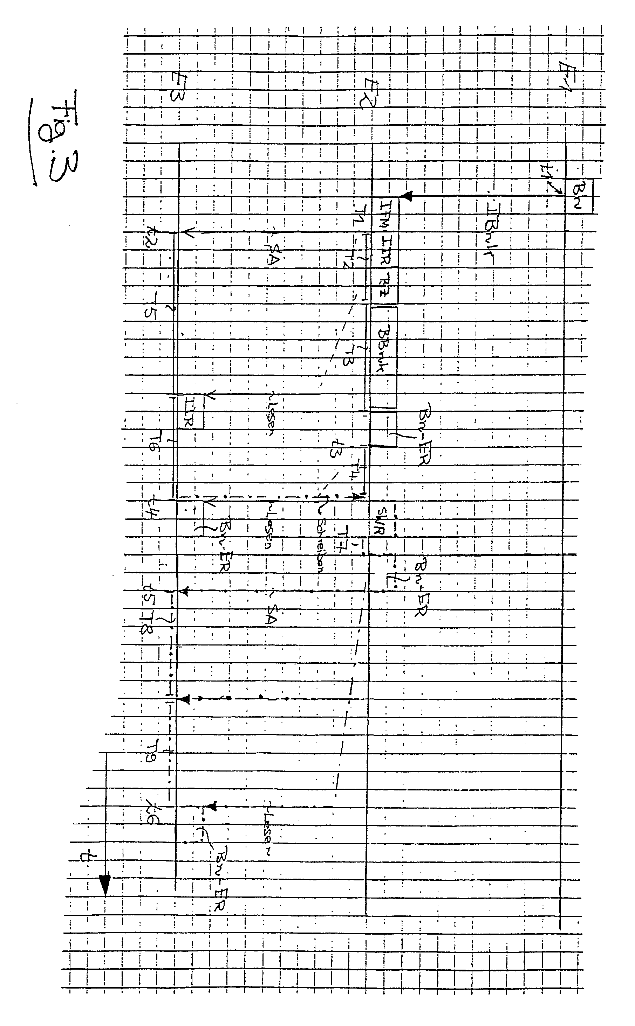

Selbst in dem Fall, in dem in einer derartigen Befehlsliste BBnk nur ein einziges Befehlswort hinterlegt ist, ermöglicht die erfindungsgemäße Peripheriebaugruppe mit dezentraler Programmsteuerung eine wesentlich schnellere Befehlswortbearbeitung, als wenn bei Aktivität einer Interruptquelle dasselbe Befehlswort von der Zentralverarbeitungseinheit erst in die Peripheriebaugruppe geladen werden muß. Dies wird weiter unten anhand der FIG 3 näher erläutert.

Gemäß einer weiteren, in FIG 2 bereits dargestellten Ausführungsform der Erfindung enthält der Speicherbereich RAMB1...RAMBn für jedes Betriebsmittel B1...Bn desweiteren bevorzugt einen Registerbereich BR1...BRn mit Registern. Diese dienen zum Zwischenspeichern von ausschließlich das jeweilige Betriebsmittel betreffenden Daten, insbesondere von Vorgabe-, Zwischen- und Ergebniswerten. So ist in FIG 2 im Arbeitsspeicher RAM für jedes Betriebsmittel B1...Bn beispielsweise jeweils ein Vorgabewert-Register B1-VWR...Bn-VWR, ein Ergebniswert-Register B1-ER...Bn-ER, und ein Alarmwert-Register B1-AWR...Bn-AWR vorgesehen. Das Er gebnis einer erfindungsgemäßen Befehlslistenbearbeitung kann beispielsweise im Ergebniswert-Register Bn-ER des dazugehörigen Registerbereiches BRn, bzw. auch z.B. im Vorgabewert-Register bzw. Alarmwert-Register von einem oder mehreren zu anderen Interruptquellen gehörigen Registerbereichen anderer Betriebsmittel der Peripheriebaugruppe hinterlegt werden.

In FIG 3 sind mit E1, E2 und E3 symbolisch drei Bearbeitungsebenen im programmgesteuerten Gerät dargestellt. Dabei betrifft die untere Ebene E1 die einzelnen Betriebsmittel der Peripheriebaugruppe, die mittlere Ebene E2 den Baugruppenprozessor CPU der Peripheriebaugruppe und schließlich die obere Ebene E3 die Zentralverarbeitungseinheit ZP des programmgesteuerten Gerätes.

Bei dem in FIG 3 skizzenhaft dargestellten Zeitablaufplan sei zunächst angenommen, daß im Zeitpunkt t1 die Interruptquelle IBnk des Betriebsmittels Bn auf der Betriebsmittelebene E1 aktiviert wird. Als Folge davon werden in der mittleren Ebene E2 und der oberen Ebene E3 verschiedene Handlungen ausgelöst. So erfolgt zunächst auf der mittleren Ebene E2 die Identifikation der Interruptquelle durch den Baugruppenprozessor CPU. Hierzu kann zunächst beispielsweise mit Hilfe einer bereits in FIG 2 dargestellten "Interrupt-Freigabemaske IFM" überprüft werden, ob der jeweilige Interrupt anwenderabhängig freigegeben oder gesperrt ist. Hierfür ist in FIG 3 beispielhaft der Zeitraum T1 eingetragen. Ergibt die Prüfung die Freigabe der aktiven Interruptquelle, so schließt sich am Ende von T1 ein Sammelalarm SA zum Zeitpunkt t2 für die Zentralverarbeitungseinheit an. Infolge dieser Signalisierung der Aktivität einer Interruptquelle eines Betriebsmittels einer Peripheriebaugruppe an die obere Ebene E3 wird das laufende Anwenderprogramm nur für die Zeitdauer T5 bis zum Erreichen eines geeigneten Programmpunktes weiterbearbeitet und anschließend ordnungsgemäß unterbrochen.

Parallel dazu schließt sich an den Zeitpunkt t2 in der mittleren Ebene E2 ebenfalls die Identifikation der aktiven Interrupt quelle an. Diese erfolgt insbesondere durch Auswerten des Interruptinformationsregisters IIR und Bestimmen der dazugehörigen Befehlsliste im Arbeitsspeicher RAM. Hierfür ist in FIG 3 beispielhaft der Zeitraum T2 eingetragen, der das Verarbeiten des Interruptinformationsregisters IIR und anschließend das Stellen des Befehlszählers BZ des Baugruppenprozessors CPU auf die Anfangsadresse der identifizierten Befehlsliste umfaßt. Im Anschluß an T2 wird während des Zeitraumes T3 die identifizierte Befehlsliste BBnk vom Baugruppenprozessor CPU bearbeitet und das Bearbeitungsergebnis beispielsweise in das dazugehörige Ergebniswertregister Bn-ER im Registerbereich BRn des jeweiligen Betriebsmittels hinterlegt. Der Ergebniswert steht somit ab dem Zeitpunkt t3 für die Zentralverarbeitungseinheit zur Verfügung.

Im Zeitpunkt t3 ist die Zentralverarbeitungseinheit in aller Regel noch nicht bereit, den Inhalt des Ergebniswert-Registers Bn-ER zu lesen. Vielmehr schließt sich in der Ebene E3 an den zur Interrupteinleitung benötigten Zeitraum T5 zunächst ein Zeitraum T6 zur Interruptidentifikation an. Hierzu wird beispielseise der Inhalt des Interruptinformationsregisters IIR von der die Aktivität einer Interruptquelle signalisierenden Peripheriebaugruppen gelesen und ausgewertet. Die Interruptidentifikation ist am Ende des Zeitraumes T6 im Zeitpunkt t4 abgeschlossen, so daß erst jetzt der Inhalt des jeweiligen Ergebniswert-Registers von der Ebene E2 in die Ebene E3 übertragend werden kann. Es tritt somit trotz der Tatsache, daß während des Zeitraumes T3 in der Regel eine Vielzahl von Befehls- und Steuerworten der Befehlsliste BBnk bearbeitet werden, aufgrund der wesentlich höheren Bearbeitungsgeschwindigkeit in der mittleren Ebene E2 eine Wartezeit T4 zwischen der Bereitstellung des Bearbeitungsergebnisses im Zeitpunkt t3 und dessen Transfer in die langsamere, obere Ebene E3 im Zeitpunkt t4 auf.

In FIG 3 ist desweiteren in strichpunktierter Linie der Fall dargestellt, der sich ergeben würde, wenn ohne Anwendung der Erfindung d.h. unter Wegfallen der Parallelverarbeitung in der mittleren Ebene E2 während der Zeiträume T2, T3 bis zum Ergebniszeitpunkt t3, die Bearbeitung auf die bekannte, oben beschriebene Weise durchgeführt werden würde. Hierbei besteht erst nach geordneter Unterbrechung des Anwenderprogrammes in der Zentralverarbeitungseinheit während des Zeitraumes T5 und nach Identifikation des jeweiligen Interruptes während des Zeitraumes T6 im Zeitpunkt t4 die Möglichkeit, das jeweils gewünschte Befehlswort von der oberen Ebene E3 einzeln beispielsweise in ein Steuerwortregister SWR der Verarbeitungseinheit VE der jeweiligen Peripheriebaugruppe in die mittlere Ebene E2 zu transferieren. In dem sich anschließenden Zeitraum T7 wird der Inhalt dieses Steuerwortregisters SWR, welches selbst bevorzugt ein Bestandteil des Arbeitsspeichers RAM der Verarbeitungseinheit VE auf der jeweiligen Peripheriebaugruppe ist, von dem dazugehörigen Baugruppenprozessor CPU bearbeitet, und das Bearbeitungsergebnis wiederum in dem zur aktiven Interruptquelle gehörigen Ergebniswert-Register Bn-ER im Zeitpunkt t5 hinterlegt. Die Transferierung des Ergebnisses von der mittleren Ebene E2 in die obere Ebene E3 erfolgt in der Regel wieder interruptgesteuert, da im Zeitraum zwischen der Abgabe des Befehlswortes im Zeitpunkt t4 an die Baugruppenverarbeitungseinheit und der Bereitstellung des Bearbeitungsergebnisses im Zeitpunkt t5 die Zentralverarbeitungseinheit die Bearbeitung des zwischen den Zeitpunkten t2 und t4 unterbrochenen Anwenderprogrammes bereits wieder aufgenommen hat.

So wird im Anschluß an das Auftreten eines Sammelalarmes SA im Zeitpunkt t5 zunächst erneut ein Zeitraum T8 benötigt, um das zentrale Anwenderprogramm ordnungsgemäß zu unterbrechen. Ferner wird der Zeitraum T9 benötigt, um im Rahmen der Interruptidentifikation z.B. zu erkennen, von welcher Peripheriebaugruppe welcher Ergebniswert wohin übertragen werden soll. Das Übertragen dieses Ergebniswertes von der Ebene E2 auf die Ebene E3 ist somit frühestens im Zeitpunkt t6 möglich.

Gemäß der Erfindung ist es möglich, Befehlsworte auf Baugruppenebene und auch Steuerworte auf Betriebsmittelebene in Befehlslisten zu hinterlegen und bei Aktivität der dazugehörigen Interruptquelle gemeinsam zu verarbeiten. Die Steuerworte ermöglichen es, die Betriebsart eines jeden Betriebsmittels Bn auf der Peripheriebaugruppe im Rahmen der allgemeinen Grundfunktion anwendungsabhängig programmiert einzustellen. Hierzu ist es gemäß einer weiteren Ausführungsform vorteilhaft, gemäß der Darstellung von FIG 2 in dem zu jedem Betriebsmittel gehörigen Registerbereich BRn innerhalb des Speicherbereiches RAMBn mindestens ein weiteres Register ("Modusregister") Bn-BMR vorzusehen. So sind in FIG 2 für die Betriebsmittel B1...Bn in den Registerbereichen BR1...BRn die Modus-Register B1-BMR...Bn-BMR vorhanden. Der Inhalt dieser Modusregister kann zum einen abhängig vom Anwenderprogramm in der Zentralverarbeitungseinheit ZP verändert und zur Betriebsartenumschaltung in das jeweilige Betriebsmittel geladen werden. Es ist aber auch möglich, daß diese Handlungen durch eine oder mehrere Steuerworte auf Betriebsmittelebene ausgelöst werden, welche in einer oder mehrerer der Befehlslisten BBll...BBnk dezentral im Arbeitsspeicher RAM der Verarbeitungseinheit VE der jeweiligen Peripheriebaugruppe SVB hinterlegt sind.

Gemäß einer weiteren vorteilhaften Ausführungsform verfügt die Peripheriebaugruppe neben der dezentralen Programmsteuerung durch Bearbeitung von im Arbeitsspeicher RAM hinterlegten Befehlslisten zusätzlich über die Möglichkeit, in bekannter Weise ein zu einer Interruptquelle gehöriges und aufgrund der Aktivität durch die Zentralverarbeitungseinheit direkt bereitgestelltes Befehls- bzw. Steuerwort zu verarbeiten. Derartige singuläre Befehls- bzw. Steuerworte werden nach Interruptsignalisierung von der Zentralverarbeitungseinheit bevorzugt in Koordination mit dem dortigen Anwenderprogramm insbesondere in ein Steuerwortregister SWR der Verarbeitungseinheit VE der Peripheriebaugruppe direkt übergeben und anschließend von dem Baugruppenprozessor CPU parallel zu oder bevorzugt vor den Befehls- und Steuerworten in den Befehlslisten BBll...BBnk bearbeitet. Abhängig vom jeweiligen Anwendungsfall kann derartigen, direkt vorgegebenen Befehls- bzw. Steuerworten eine höhere Bearbeitungspriorität eingeräumt werden, als den in den einzelnen Befehlslisten hinterlegten Worten. Es besteht aber auch die Möglichkeit, daß die Befehlsworte einer Interruptquelle, welche in der dazugehörigen Befehlsliste im Baugruppenarbeitsspeicher RAM hinterlegt sind bzw. die einzelnen Befehlsworte, welche der Baugruppenverarbeitungseinheit VE vom Anwenderprogramm der Zentralverarbeitungseinheit direkt vorgegeben werden, in ihrer Bearbeitungspriorität gleichwertig zu behandeln, so daß diese rein sequentiell in der Reihenfolge ihres Auftretens bearbeitet werden. Schließlich besteht zur Vermeidung eines Bearbeitungskonfliktes zwischen den Befehlsworten einer Befehlsliste und den von der Zentralverarbeitungseinheit direkt vorgebbaren Befehlsworten auch die Möglichkeit, im Einzelfall in die jeweilige Befehlsliste keine Befehls- und Steuerworte einzutragen und sich mit der, aufgrund der erhöhten Interruptbelastung mehr Rechenzeit benötigenden Direktvorgabe von einzelnen Worten durch die Zentralverarbeitungseinheit zu begnügen.

Die Erfindung hat somit den weiteren Vorteil, daß ohne Störung der erfindungsgemäßen dezentralen Progammsteuerung der Peripheriebaugruppe über die Befehlslisten unabhängig davon bzw. parallel dazu auch die bekannte Signalvorverarbeitung durch Direktvorgabe einzelner Befehls- bzw. Steuerworte bei Bedarf weiterhin benutzt werden kann.

Bei einer weiteren vorteilhaften Ausführungsform der Erfindung sind die Befehls- und Steuerworte in den zur jeweiligen Interruptquelle gehörigen Befehlslisten mittels der Zentralverarbeitungseinheit bevorzugt in Koordination mit einem dortigen Initialisierungsprogramm vorgebbar. Es besteht für den Anwender somit gemäß der Darstellung von FIG 1 die Möglichkeit, sowohl die Teile des Anwenderprogramms, welche übergeordnet in der Zentralverarbeitungseinheit ZP hinterlegt und verarbeitet wer den, als auch die Teile, welche zur dezentralen Programmsteuerung der einzelnen Peripheriebaugruppen bestimmt sind z.B. vom Programmiergerät PG übergeordnet vorzugeben.

Gemäß einer weiteren vorteilhaften Ausführungsform der Erfindung ist auf der Peripheriebaugruppe zusätzlich ein bidirektionaler Schnittstellenspeicher ("dual-port RAM") vorgesehen. Ein derartiger Speicher DP-RAM ist im Strukturbild der FIG 2 bereits dargestellt und verfügt über die gleichen Befehlslisten bzw. Registerbereiche wie der Arbeitsspeicher RAM der Verarbeitungseinheit VE. Er steht zum einen über die Systembusleitung SB zumindest mit der Zentralverarbeitungseinheit ZP und baugruppenintern über die Baugruppenbusleitung BB zumindest mit der Verarbeitungseinheit VE und den Baugruppenbetriebsmitteln PBM in Verbindung. Ein derartiger bidirektionaler Schnittstellenspeicher DP-RAM ermöglicht zumindest der Verarbeitungseinheit VE auf der Peripheriebaugruppe SVB und der Zentralverarbeitungseinheit ZP sowohl einen schreibenden als auch lesenden Zugriff. Desweiteren ist es möglich, das zumindest die Registerbereiche BR1...BRn im Arbeitsspeicher RAM und im Schnittstellenspeicher DP-RAM direkt von den dazugehörigen Baugruppenbetriebsmitteln B1...Bn aktualisiert werden können. Der Schnittstellenspeicher ermöglicht eine Entkopplung des Baugruppenarbeitsspeichers RAM von der Zentralverarbeitungseinheit ZP. Der Baugruppenprozessor CPU kann somit insbesondere zur Verarbeitung der zum jeweiligen Betriebsmittel gehörigen Registerbereiche BR1...BRn und der zur jeweiligen Interruptquelle gehörigen Befehlsliste BBII...BBnk auf den Arbeitsspeicher RAM zugreifen, ohne daß im Falle eines zufälligen gleichzeitigen Zugriffs der Zentralverarbeitungseinheit ein Konflikt entsteht. Ein derartiger Zugriffskonflikt kann darin bestehen, daß beispielsweise bei Schreiben der Zentralverarbeitungseinheit in eine Speicherzelle und gleichzeitigem Lesen des Inhalts derselben durch die Baugruppenverarbeitungseinheit diese bereits einen Teil der neu eingetragenen Information, aber auch noch einen Teil der ursprüngich enthaltenen Information aufnimmt. Falls der bidirektionaler Schnittstellenspeicher nicht vorhanden ist, müßten derartige Konflikte beispielsweise durch Koordinationsprogramme vermieden werden, welche den Zugriff unterschiedlicher Betriebsmittel auf den gleichen Speicher regeln. Derartige Programme beeinträchtigen aber die Gesamtbearbeitungsgeschwindigkeit, und sind bei Vorhandensein eines bidirektionalen Schnittstellenspeichers entbehrlich. So werden beispielsweise die aufgrund der Bearbeitung der Befehlsworte in den Befehlslisten erzeugten Bearbeitungsergebnisse bevorzugt von den betroffenen Betriebsmitteln selbst zur Sicherheit in die entsprechenden Ergebniswert-Register B1-ER...Bn-ER des Baugruppenarbeitsspeichers RAM und des bidirektionalen Schnittstellenspeichers DP-RAM eingetragen. Ferner ist es insbesondere beim Auftreten von durch die Zentralverarbeitungseinheit verursachten Änderungen innerhalb der Befehlslisten möglich, den Inhalt des bidirektionalen Schnittstellenspeichers komplett bevorzugt in Koordination mit einem zentralen Initialisierungsprogramm in den Baugruppenarbeitsspeicher RAM zu kopieren.

Schließlich verfügt der bidirektionale Schnittstellenspeicher über weitere, in der Verarbeitungseinheit VE entsprechend vorhandene Register. Diese sind z.B. die zur Interruptkoordination benötigten Interruptinformationsregister IIR und die Interrupt-Freigabemaske IFM. Weitere im Schnittstellenspeicher entsprechend vorhandene Register betreffen bevorzugt die direkte Befehlswortübergabe von der Zentralverarbeitungseinheit zur Peripheriebaugruppe und enthalten das Steuerwortregister SWR.

Die erfindungsgemäße Peripheriebaugruppe ist besonders geeignet zur Verwendung in einem programmgesteuerten Automatisierungsgeräten zur Echtzeitverarbeitung von Prozeßsignalen. Dort kann sie beispielsweise als eine Reglerbaugruppe, Binärwertein- und/oder Ausgabebaugruppe, Analogwertein-, Verarbeitungs- und/oder Ausgabebaugruppe, Zählerbaugruppe oder Ansteuerbaugruppe für Prozeßbetriebsmittel dienen.

In FIG 4 ist als Beispiel für ein Betriebsmittel einer erfindungsgemäß aufgebauten Peripheriebaugruppe mit dezentraler Programmsteuerung ein Kanal einer Zählerbaugruppe dargestellt. Der programmierbare Zählerkanal PZK1 als Betriebsmittel B1 verfügt beispielhaft über einen Impulseingang IE, einen Toreingang TE, einen Dateneingang DE und einen Zählerausgang ZA. Die zu zählenden Impulse werden vom Prozess über die Prozeßschnittstelle P1 an den Impulseingang IE geführt. Über den Toreingang TE ist eine ebenfalls vom Prozeß beeinflußbare Freigabe bzw. Sperrung des Zählerkanales möglich. Über den Dateneingang DE werden dem programmierbaren Zählerkanal PZK1 über die Baugruppenbusleitung BB eine Vielzahl von Informationen von der Verarbeitungseinheit VE zugeführt. Diese enthalten Steuerworte auf Betriebsmittelebene, mit denen die jeweils gewünschte Betriebsart des Zählerkanals, z.B. Vorwärts- bzw. Rückwärtszählers, mittels des aktuellen Inhalts des Modus-Registers B1-BMR programmiert einstellbar ist. Desweiteren können über den Dateneingang DE die aktuellen Inhalte z.B. des Vorgabewertregisters B1-VWR und des Alarmwert-Registers B1-AWR dem Zählerkanal vorgegeben werden. Schließlich ist es möglich, den Zählerkanal durch Befehlsworte auf Baugruppenebene programmgesteuert zu aktivieren bzw. zu sperren. Erreicht schlielich der Zählerstand beim Zählvorgang einen gewünschten Vorgabewert, so wird dies am Zählerausgang ZA signalisiert.

In dem Beispiel der FIG 4 dienen die Signale am Toreingang TE und am Zählerausgang ZA gleichzeitig als Interruptquellen IBI1, IBI2. Diese Interruptquellen IQ werden beispielsweise entsprechend der Darstellung von FIG 2 dem Interrupt-Kontroller IK der Baugruppenverarbeitungseinheit VE zur Überwachung zugeführt.

## Ansprüche

1. Peripheriebaugruppe (SVB) mit dezentraler Programmsteuerung, welche mindestens über eine Systembusleitung (SB) mindestens mit einer Zentralverarbeitungseinheit (ZP) eines programmgesteuerten Gerätes verbunden ist, mit

    a) Betriebsmitteln (B1...Bn) bevorzugt gleicher Grundfunktion zur Vorgabe und/oder Verarbeitung von externen Signalen (P1...Pn), wobei mindestens eine Größe insbesondere am Ein- und/oder Ausgang jedes Betriebsmittels auch als Interruptquelle (IBI1...IBlk,...,IBnl... IBnk) dient,

    b) einem Arbeitsspeicher (RAM) mit mindestens einem Speicherbereich (RAMB1...RAMBn) für jedes Betriebsmittel (B1...Bn), welcher jeweils eine zur jeweiligen Interruptquelle (IBI1...IBlk,...,IBnl...IBnk) gehörige Befehlsliste (BBI1...BBlk,...,BBnl...BBnk) zum Hinterlegen von mindestens einem Befehlswort auf Baugruppenebene bzw. einem Steuerwort auf Betriebsmittelebene für die dezentrale Programmsteuerung enthält, und mit

    c) einer Verarbeitungseinheit (VE), welche bei Aktivierung einer der Interruptquellen (IQ) eines Betriebsmittels (Bn)

    c1) der Zentralverarbeitungseinheit (ZP) die Aktivität einer Interruptquelle signalisiert (SA) und Mittel zur Interruptidentifikation (IIR) bereitstellt, und

    c2) nach interner Interruptidentifikation (IBnk) parallel dazu die Befehlsworte in der zur aktiven Interruptquelle gehörigen Befehlsliste (BBnk) ausführt (FIG 2).

2. Vorrichtung nach Anspruch 1, **dadurch gekennzeichnet,** daß der Speicherbereich (RAMB1...RAMBn) für jedes Betriebsmittel (B1...Bn) einen Registerbereich (BR1...BRn) mit Registern (B1-VWR,B1-ER,B1-AWR,...,Bn-VWR,Bn-ER,Bn-AWR) zum Zwischenspeichern von Betriebsmitteldaten enthält, insbesondere von Vorgabe-, Zwischen- und Ergebniswerten.

3. Vorrichtung nach Anspruch 1 oder 2, **dadurch gekennzeichnet,** daß der Registerbereich (BR1...BRn) für jedes Betriebsmittel (B1...Bn) mindestens ein weiteres Register (B1-BMR...Bn-BMR) enthält, womit die Betriebsart ("Mode") des jeweiligen Betriebsmittels mittels eines Steuerwortes auf Betriebsmittelebene (Bn) programmiert einstellbar ist.

4. Vorrichtung nach einem der vorangegangenen Ansprüche, **dadurch gekennzeichnet,** daß die Verarbeitungseinheit (VE) einzelne, von der Zentralverarbeitungseinheit (ZP) bei Aktivität einer Interruptquelle bevorzugt in Koordination mit einem dortigen übergeordneten Anwenderprogramm insbesondere über ein Steuerwortregister (SWR) direkt vorgebbare Befehlsworte auf Baugruppenebene bzw. Steuerworte auf Betriebsmittelebene parallel oder bevorzugt bearbeitet.

5. Vorrichtung nach einem der vorangegangenen Ansprüche, **dadurch gekennzeichnet,** daß die Befehlsworte auf Baugruppenebene bzw. Steuerworte auf Betriebsmittelebene in den zu den Interruptquelle (IBnk) gehörigen Befehlslisten (BBI1...BBlk,...,BBnl...BBnk) mittels der Zentralverarbeitungseinheit (SVB) bevorzugt in Koordination mit einem dortigen zentralen Initialisierungsprogramm vorgebbar sind.

6. Vorrichtung nach einem der vorangegangenen Ansprüche, **gekennzeichnet** durch einen bidirektionalen Schnittstellenspeicher ("dual-port-RAM"),

a) auf den die Verarbeitungseinheit (VE) bevorzugt über eine Baugruppenbusleitung (BB) und die Zentralverarbeitungseinheit (ZP) bevorzugt über die Systembusleitung (SB) schreibend und lesend zugreifen kann,

b) der entsprechend dem Arbeitsspeicher (RAM) über mindestens einen identisch aufgebauten Speicherbereich (RAMB1...RAMBn) für jedes Betriebsmittel (B1...Bn) verfügt, und

c) dessen Inhalt insbesondere beim Auftreten von durch die Zentralverarbeitungseinheit (ZP) verursachten Änderungen in den Arbeitsspeicher (RAM) kopiert wird.

7. Vorrichtung nach Anspruch 6, **dadurch gekennzeichnet,** daß der bidirektionale Schrittstellenspeicher über weitere, in der Verarbeitungseinheit (VE) entsprechend vorhandene Register (SWR,IFM,IIR) insbesondere zur Interruptkoordination und zur direkten Befehls- bzw. Steuerwortübergabe von Zentralverarbeitungseinheit zu Peripheriebaugruppe verfügt.

8. Verwendung einer Peripheriebaugruppe nach Anspruch 1 in einem programmgesteuerten Automatisierungsgerät zur Echtzeitverarbeitung von Prozeßsignalen.

9. Verwendung einer Peripheriebaugruppe nach Anspruch 1 als Reglerbaugruppe, Binärwertein- und/oder Ausgabebaugruppe, Analogwertein-, Verarbeitungs- und/oder Ausgabebaugruppe, Zählerbaugruppe und Ansteuerbaugruppe für Prozeßbetriebsmittel in einem programmgesteuerten Automatisierungsgerät zur Echtzeitverarbeitung von Prozeßsignalen.

10. Programmgesteuertes Gerät, insbesondere Automatisierungssystem zur Echtzeitführung von technischen Prozessen, mit einer Peripheriebaugruppe nach Anspruch 1.

Fig. 1

Fig. 4

Fig.2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 212 393 (I.B.M.) <br> * Abbildungen 3-5D; Seite 1 - Seite 14, Zeile 16; Seite 16, Zeile 14 - Seite 29, Zeile 17 * <br> --- | 1-5 | G 06 F 13/24 |
| A | US-A-4 404 627 (A.R. MARCANTONIO) <br> * Ganzes Dokument * <br> --- | 1-3 | |
| A | EP-A-0 324 144 (SIEMENS) <br> * Ganzes Dokument * <br> --- | 1-3 | |
| A | ELECTRONICS, 17. August 1978, Seiten 107-112; C. KINNIE: "Dual-port RAM hikes throughput in input/output controller board" <br> * Ganzes Dokument * <br> --- | 1,2,5-6 | |
| A | ELECTRO/80 CONFERENCE RECORD, Band 5, 13.-15. Mai 1980, Seiten 1-11(26/3), Boston, MA, US; R.E. HIGGINBOTHAM: "Real-time signal processing with FPS Array processors" <br> * Ganzes Dokument * <br> ----- | 1,5-10 | RECHERCHIERTE SACHGEBIETE (Int. Cl.5) <br><br> G 06 F |

Der vorliegende Recherchenbericht wurde für alle Patentansprüche erstellt

| Recherchenort | Abschlußdatum der Recherche | Prüfer |
|---|---|---|
| DEN HAAG | 20-03-1990 | SOLER J.M.B. |